# EUROPEAN PATENT APPLICATION

(11) **EP 4 806 579 A1**
(43) Date of publication of application: **16.09.2026**
(21) Application number: 25757903.7
(22) Date of filing: 14.02.2025
(51) Int. Cl.: B23K 31/00, B23K 9/00, B23K 9/02, B23K 37/06, B63B 75/00

(54) **CIRCUMFERENTIAL WELDING METHOD AND CIRCUMFERENTIAL WELDING JOINT**

(30) Priority: 19.02.2024 JP 2024022563; 29.03.2024 JP 2024055208
(71) Applicant: JFE Steel Corporation, Tokyo 100-0011 (JP)
(72) Inventor: TAKAKI Yoshifumi, Tokyo 100-0011 (JP); AKAMAE Akitoshi, Tokyo 100-0011 (JP); UCHIDA Kenji, Tokyo 100-0011 (JP); SAKIMOTO Takahiro, Tokyo 100-0011 (JP); UEDA Keiji, Tokyo 100-0011 (JP)
(74) Representative: Haseltine Lake Kempner LLP
(86) International application number: PCT/JP2025/005007
(87) International publication number: WO 2025/177966

(57) **Abstract**

Provided are a boxing welding method and a boxing welded joint for a steel structure having a bracket.

The boxing welding method according to the present invention includes performing welding between a vertical plate 2 and a main plate 1, forming a first weld bead 4 along a short side of a rectangular contact surface 3a where a bracket makes contact with the main plate, placing a weld metal retaining member 7 adjacent to the first weld bead on the main plate 1, and sequentially forming a second weld bead 5 and a third weld bead 6 along respective long sides of the rectangular contact surface 3a so that the second weld bead 5 and the third weld bead 6 cover end portions of the first weld bead and are elongated along the weld metal retaining member 7 on the main plate 1.

## Description

### Technical Field

The present invention relates to a boxing welding method for welding a main plate, a vertical plate, and a bracket by using a weld metal retaining member. In particular, the present invention relates to a boxing welding method that makes it possible to improve fatigue strength of a weld between a main plate and a bracket of a steel structure where stress concentration is high by elongating a weld bead to a predetermined dimension. Furthermore, the present invention relates to a boxing welded joint having improved fatigue strength obtained by this method.

### Background Art

In recent years, in the field of offshore wind power generation, floating offshore wind power generation is being considered because of ease of installation even in a sea area having a depth of 50 m or more. Since a floating offshore wind power generation facility is exposed to external forces such as waves, fatigue strength of a weld toe portion of a welded joint portion of a floating offshore wind power generation facility undesirably decreases.

In view of this, various techniques for improving fatigue strength of a weld toe portion of a welded joint portion of a large-sized structure such as a floating offshore wind power generation facility are being considered. For example, Patent Literature 1 discloses a boxing welded joint of a gusset that is a welded joint including a first weld bead that is elongated along a short side of the gusset beyond both sides of the short side on a main plate and second and third weld beads that are elongated along long sides of the gusset over the first weld bead on the main plate.

Patent Literature 2 also discloses a similar welded joint. According to Patent Literature 2, a boxing welded joint whose fatigue strength can be improved stably at low cost is obtained by managing dimensions of shapes of these weld beads that are elongated (hereinafter also referred to as "elongated weld beads"), especially, a spacing between the elongated weld beads and lengths of the elongated weld beads.

### Citation List

### Patent Literature

PTL 1: Japanese Unexamined Patent Application Publication No. 2018-158380
PTL 2: Japanese Unexamined Patent Application Publication No. 2020-055020

### Summary of Invention

### Technical Problem

However, in actual welding work, visibility during welding is low due to a welding shield, and there is no mark for welding an elongated weld bead. Therefore, according to the welded joints and welding methods described in Patent Literature 1 and Patent Literature 2, errors occur in elongated weld bead spacing M and elongated weld bead length N, which are considered to contribute to an improvement in fatigue strength, and it is undesirably hard to control the elongated weld bead spacing M and the elongated weld bead length N to predetermined dimensions.

An object of the present invention is to solve the problem of the conventional arts and to provide a boxing welding method and a boxing welded joint that improve fatigue strength at a weld of a bracket by controlling an elongated weld bead spacing M and an elongated weld bead length N to predetermined dimensions.

### Solution to Problem

As a result of various studies for accomplishing the above object, the inventors of the present invention arrived at the necessity of an auxiliary member for accurately forming shapes of weld beads.

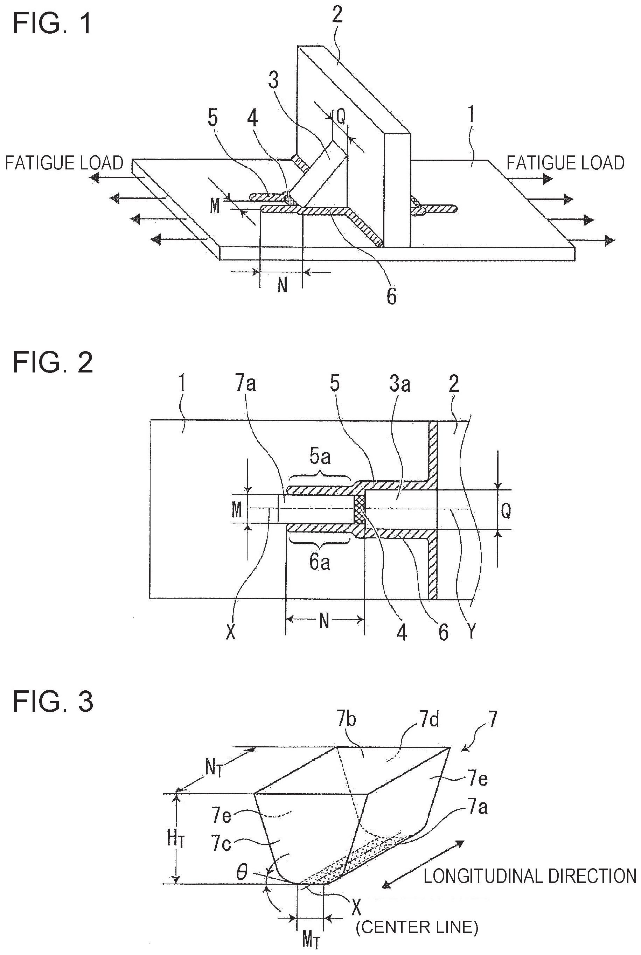

First, a welded joint having a bracket in which weld beads are elongated by using, as a guide during welding, a weld metal retaining member 7 (hereinafter also referred to simply as a "retaining member"), which is a welding auxiliary member that can be removed after welding, such as the one illustrated in Fig. 3, was produced for a steel structure having a bracket. Furthermore, a welded joint having an elongated weld bead welded in a boxing manner along a bracket as in the conventional arts was also produced for comparison. A fatigue test was conducted by using these welded joints in which the weld beads are elongated after measuring an elongated weld bead spacing M and an elongated weld bead length N of each of the welded joints by a vernier caliper. By comparing fatigue test results thus obtained, an effect of improving fatigue strength in the welded joints in which the weld beads are elongated was verified. As a result, it was found that fatigue strength of the welded joint in which the weld beads are elongated by using the retaining member is stably improved since the dimensions of the shapes of the elongated weld beads are accurately formed to match target dimensions.

The present invention was accomplished based on such a finding after additional consideration, and the present invention is summarized as follows.
[1] A boxing welding method for welding a main plate, a vertical plate, and a bracket by using a weld metal retaining member, the weld metal retaining member having a rectangular bottom surface that makes contact with the main plate, the boxing welding method including:
   forming a first weld bead along a short side of a rectangular contact surface where the bracket makes contact with the main plate;
   placing the weld metal retaining member adjacent to the first weld bead on the main plate; and
   sequentially forming a second weld bead and a third weld bead along long sides of the rectangular contact surface so that the second weld bead and the third weld bead cover end portions of the first weld bead and are elongated on the main plate along the weld metal retaining member.
[2] The boxing welding method according to [1], in which
   a spacing N that is a shorter one of a spacing between the short side of the rectangular contact surface and a tip of the second weld bead and a spacing between the short side of the rectangular contact surface and a tip of the third weld bead is 5.0 mm to 60.0 mm, and
   M ≤ 10.0 mm and M ≤ Q, where M is a spacing between an elongated portion of the second weld bead and an elongated portion of the third weld bead and Q is a length of the short side of the rectangular contact surface.
[3] The boxing welding method according to [1] or [2], in which
   the weld metal retaining member has a shape such that a length N_{T} of the rectangular bottom surface in a longitudinal direction is 5.0 mm to 60.0 mm, and
   a front side surface and a rear side surface of the weld metal retaining member that are cross sections orthogonal to the longitudinal direction have an inverted trapezoid shape, and a bottom surface width M_{T} that is a length of the short side of the rectangular bottom surface is greater than 0.0 mm and equal to or less than 10.0 mm.
[4] The boxing welding method according to any one of [1] to [3], in which
   a shape of a region in which lateral side surfaces of the weld metal retaining member make contact with the weld beads on a cross section orthogonal to a longitudinal direction of the weld metal retaining member is a curved line or a straight line whose elevation angle θ from the rectangular bottom surface is equal to or less than 60°.
[5] The boxing welding method according to any one of [1] to [4], in which
   the weld metal retaining member is made of copper or is made of a ceramic material.
[6] The boxing welding method according to any one of [1] to [5], in which
   the main plate is a floating member of a floating offshore wind power generation facility, and the vertical plate is a tower member of the floating offshore wind power generation facility.
[7] A boxing welded joint including a main plate, a vertical plate, and a bracket, the boxing welded joint including:
   a first weld bead;
   a second weld bead; and
   a third weld bead, in which
   the first weld bead is formed along one short side of a rectangular contact surface where the bracket makes contact with the main plate,
   the second weld bead and the third weld bead are formed along respective long sides of the rectangular contact surface so as to cover a part of a starting end portion or a part of a terminal end portion of the first weld bead and be elongated on the main plate, and
   a region in which the second weld bead and/or the third weld bead elongated on the main plate make contact with the main plate on a cross section orthogonal to a longitudinal direction of the second weld bead and/or the third weld bead elongated on the main plate has a shape whose elevation angle θ from the main plate is equal to or less than 60°.
[8] The boxing welded joint according to [7], in which
   a spacing N that is a shorter one of a spacing between the short side of the rectangular contact surface and a tip of the second weld bead and a spacing between the short side of the rectangular contact surface and a tip of the third weld bead is 5.0 mm to 60.0 mm, and
   M ≤ 10.0 mm and M ≤ Q, where M is a spacing between an elongated portion of the second weld bead and an elongated portion of the third weld bead and Q is a length of the short side of the rectangular contact surface.
[9] The boxing welded joint according to [7] or [8], in which
   the main plate is a floating member of a floating offshore wind power generation facility, and the vertical plate is a tower member of the floating offshore wind power generation facility.

### Advantageous Effects of Invention

According to the present invention, by elongating weld beads for a bracket 3 of a steel structure while using a weld metal retaining member 7 as a guide, a spacing M between elongated portions of the weld beads and a spacing N from a rectangular contact surface 3a to a tip of the weld bead elongated portion can be controlled to predetermined dimensions. As a result, it is possible to provide a boxing welding method and a boxing welded joint that can improve fatigue strength as compared with a conventional boxing welded joint, thereby producing a remarkable effect in industry.

### Brief Description of Drawings

[Fig. 1] Fig. 1 is a perspective view schematically illustrating appearance of an example of a boxing welded joint obtained by a boxing welding method according to the present invention.
[Fig. 2] Fig. 2 is a plan view schematically illustrating a shape on one side of an example of the boxing welded joint obtained by the boxing welding method according to the present invention.
[Fig. 3] Fig. 3 is a perspective view schematically illustrating an example of a weld metal retaining member used in the boxing welding method according to the present invention.
[Fig. 4] Fig. 4(a) to 4(c) are cross-sectional views schematically illustrating differences (three examples) of a shape of a cross section of the weld metal retaining member used in the boxing welding method according to the present invention.
[Fig. 5] Fig. 5 is a cross-sectional view schematically illustrating states before and after removal of the weld metal retaining member ((a) during welding and (b) after removal).
[Fig. 6] Fig. 6 is a plan view schematically illustrating an example of a procedure of the boxing welding method according to the present invention.

### Description of Embodiments

According to the present invention, in fillet welding between a vertical plate and a bracket on a main plate, a weld metal retaining member that can be removed after the welding is used as a guide, and weld beads are elongated along the weld metal retaining member. This makes it possible to obtain a boxing welding method that can increase dimensional accuracy of shapes of elongated weld beads and improve fatigue strength of a welded joint and a boxing welded joint having improved fatigue strength obtained by this method.

### [Weld Metal Retaining Member 7]

First, a weld metal retaining member 7, which is an auxiliary member for forming elongated weld beads and is important in the boxing welding method according to the present invention, is described.

Fig. 3 illustrates an outline of an example of the weld metal retaining member 7. Hereinafter, the weld metal retaining member is sometimes referred to as a "retaining member". The shape of the retaining member 7 is constituted by six flat surfaces.

Among the six flat surfaces, a lower surface is a rectangular bottom surface 7a, and an upper surface is a rectangular upper surface 7b. The rectangular bottom surface 7a makes contact with a main plate 1, and a length N_{T} of the rectangular bottom surface 7a in a longitudinal direction corresponds to lengths of elongated portions of a second weld bead 5 and a third weld bead 6 that are elongated on the main plate 1. The length N_{T} in the longitudinal direction is 5.0 mm to 60.0 mm. From the perspective of workability, the length N_{T} is more preferably 5.0 mm to 50.0 mm. Note that this length N_{T} is preferably set larger than a spacing N, which is a target dimension of the lengths of the elongated portions of the weld beads described above.

A length (i.e., a bottom surface width) M_{T} of a short side of the rectangular bottom surface 7a that makes contact with the main plate 1 is preferably greater than 0.0 mm and equal to or less than 10.0 mm. Note that the length M_{T} of the short side is preferably set and manufactured for each welding work to match a target spacing M between an elongated portion 5a of the second weld bead 5 and an elongated portion 6a of the third weld bead 6.

The length M_{T} of the short side is more preferably equal to or greater than 1.0 mm and is more preferably equal to or less than 7.0 mm.

Next, one of side surfaces of the weld metal retaining member 7 orthogonal to the longitudinal direction is a front side surface 7c, an opposite one of the side surfaces is a rear side surface 7d, and side surfaces of the weld metal retaining member 7 along the longitudinal direction are lateral side surfaces 7e. A cross-sectional shape orthogonal to the longitudinal direction (i.e., shapes of the front side surface 7c and the rear side surface 7d) is preferably a substantially inverted trapezoid shape.

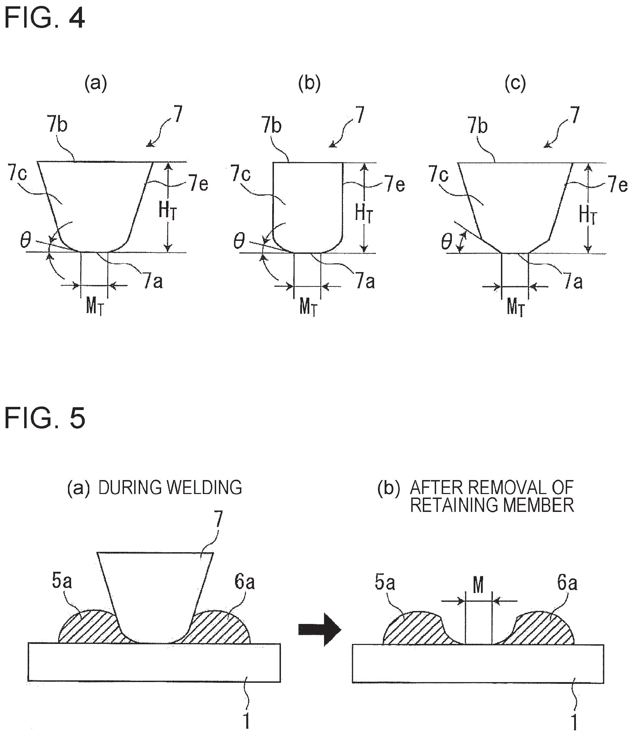

Fig. 4 illustrates examples (three examples) of the cross-sectional shape. As illustrated in Fig. 4(a) and Fig. 4(b), a shape of regions where the lateral side surfaces 7e make contact with the weld beads on the cross section orthogonal to the longitudinal direction is preferably a curved line whose elevation angle (i.e., rising angle) θ from the rectangular bottom surface 7a is equal to or less than 60°. Note that instead of the curved line, the shape of the regions may be a straight line whose elevation angle θ from the rectangular bottom surface 7a is equal to or less than 60°, as illustrated in Fig. 4(c). Note that θ is more preferably equal to or greater than 5° and equal to or less than 60°. When the elevation angle θ from the rectangular bottom surface 7a exceeds 60°, a fatigue property deteriorates due to stress concentration at a weld toe portion, and as a result, the number of cycles to fracture of the welded joint according to the present invention does not improve. In a case where the elevation angle θ is less than 5°, welding work is difficult. By employing such a curved line or straight line, the shape of the weld bead elongated portions tends to become a shape close to a semi-ellipsoid whose elevation angle θ is equal to or less than 60°, as illustrated in Fig. 5. This can reduce or avoid stress concentration at the elongated portions. This elevation angle θ is more preferably equal to or greater than 10° and is more preferably equal to or less than 50°. For the purposes of this description, the cross-sectional shapes illustrated in Fig. 4(a) to Fig. 4(c) are referred to as "inverted trapezoid shapes". The inverted trapezoid shape includes, for example, both of a shape such that lower regions of the lateral side surfaces 7e (i.e., regions close to the rectangular bottom surface 7a) have a curved shape as illustrated in Fig. 4(a) and Fig. 4(b) and the lateral side surfaces 7e on both sides widen upward as illustrated in Fig. 4(a) and a shape such that the lower regions of the lateral side surfaces 7e have a curved shape as illustrated in Fig. 4(a) and Fig. 4(b) and the lateral side surfaces 7e on both sides do not widen upward as illustrated in Fig. 4(b). Furthermore, for example, the inverted trapezoid shape includes a shape such that the lower regions of the lateral side surfaces 7e have a linear shape and the lateral side surfaces 7e on both sides widen upward as illustrated in Fig. 4(c).

A relationship between a shape of a lower portion of the retaining member 7 and the weld beads is described with reference to Fig. 5. The shape of the retaining member 7 illustrated in Fig. 5 is the shape illustrated in Fig. 4(a) or 4(b), specifically, the shape such that the lower regions of the lateral side surfaces 7e have a curved shape and the lateral side surfaces 7e on both sides widen upward as illustrated in Fig. 4(a) or the lateral side surfaces 7e on both sides do not extend upward as illustrated in Fig. 4(b). Fig. 5(a) is a cross-sectional view illustrating a state in which the retaining member 7 is placed on the main plate 1 and the elongated portion 5a of the second weld bead 5 and the elongated portion 6a of the third weld bead 6 are formed along the lateral side surfaces 7e of the retaining member 7 in the longitudinal direction. Fig. 5(b) is a cross-sectional view illustrating a state after removal of the retaining member 7. As illustrated in Fig. 5(b), the weld beads have the same shape as the shape of the lower portion of the retaining member 7. That is, the length M_{T} of the short side of the rectangular bottom surface 7a of the retaining member 7 is equal to a spacing M between the elongated weld beads, and inner weld toe portions of the two weld beads have a rising shape corresponding to the elevation angle θ. Therefore, in a case where welding is performed by using the retaining member 7 according to the present invention, the weld toe portions of the welded joint have a smooth shape, and the spacing M between the elongated weld beads is kept constant. This can reduce or avoid stress concentration at the elongated portions. Note that the shape of the rectangular upper surface 7b of the retaining member 7 need not be flat.

Furthermore, a height H_{T} of the retaining member 7 is not limited in particular. The height H_{T} is determined as appropriate from the perspective of ease of handling, and is preferably 20.0 mm to 60.0 mm.

Next, the retaining member 7 is preferably a member that is not joined to a weld metal. By using a member that is not joined to a weld metal as the retaining member 7, the retaining member 7 can be easily detached from an installation position after bead welding. Such a member is, for example, made of copper or a ceramic material. Note that examples of the ceramic material include materials containing silica, zirconia, alumina, or the like as a main component.

### [Boxing Welding Method]

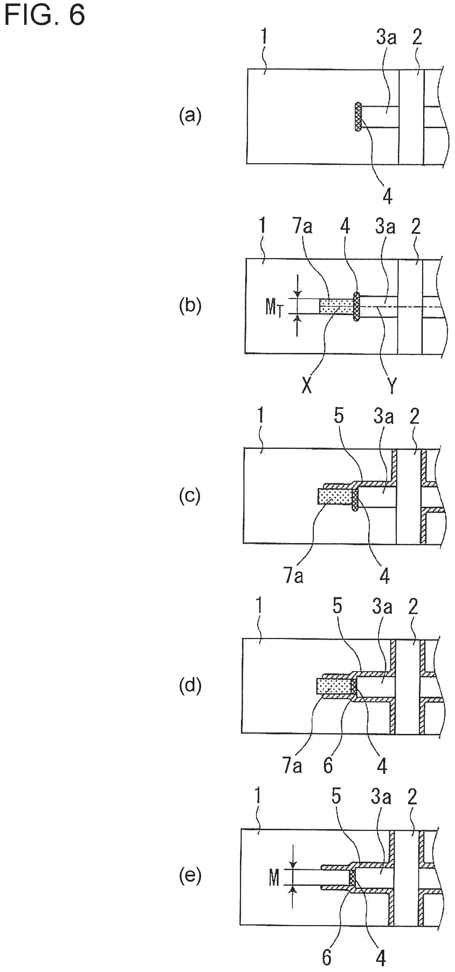

Next, an aspect of steps of the boxing welding method according to the present invention is described in order with reference to Fig. 6.

In this example, first, as a preparation step before a boxing welding step, the vertical plate 2 is placed on an upper surface of the main plate 1, and the vertical plate is sandwiched between two brackets 3 from both sides of the vertical plate. Each of the brackets is placed so that two side surfaces thereof make contact with the main plate 1 and the vertical plate 2. Fig. 6 illustrates only one side of the main plate 1. A rectangular contact surface 3a in which the bracket 3 makes contact with the main plate 1 matches a shape of a rectangular line obtained by projecting the bracket 3 onto the main plate 1. In the following description, it is assumed that the shape of the rectangular line is the rectangular contact surface 3a.

Next, a welding step described below is performed on the placed members. To facilitate understanding, Fig. 6 illustrates a procedure of boxing welding on the bracket 3.

Note that fillet welding is performed between the vertical plate 2 and the main plate 1 before welding of the bracket 3 (see Figs. 1 and 2). Then, the boxing welding of the bracket 3 is performed in the following order of (a) to (e). This obtains weld beads in the welded joint according to the present invention including properties or the like that will be described later.

(a) The first weld bead 4 is formed along one short side (in this example, a short side farther away from the vertical plate 2) of the rectangular contact surface 3a in which the bracket 3 makes contact with the main plate 1 (see Fig. 6(a)).
   Note that gas shield arc welding is preferably used as a welding method for forming the weld beads. Conditions of the gas shield arc welding will be described later.
(b) The weld metal retaining member 7 is placed adjacent to the first weld bead 4 formed in (a) on the main plate 1 so that a center line X of the rectangular bottom surface 7a of the weld metal retaining member 7 is aligned with a plate thickness center line Y of the bracket 3. Here, aligning the center lines X and Y means allowing a displacement of 1 mm to 2 mm.
(c) The second weld bead 5 is formed along one long side of the rectangular contact surface 3a so as to cover an end portion of the first weld bead 4 and be elongated on the main plate 1 along the rectangular bottom surface 7a of the weld metal retaining member 7. Covering the end portion of the first weld bead 4 means that a starting end portion or a terminal end portion of the first weld bead 4 is at least partially melted by the second weld bead 5. A length N of the elongated portion 5a of the second weld bead 5 is made shorter than the length N_{T} of the long side of the rectangular bottom surface 7a of the retaining member 7. This can keep the shape of the elongated portion accurate.
(d) Similarly, the third weld bead 6 is formed along the other long side of the rectangular contact surface 3a so as to cover an end portion of the first weld bead 4 and be elongated on the main plate 1 along the rectangular bottom surface 7a of the weld metal retaining member 7. This makes the shape of the bead constant. Covering the end portion of the first weld bead 4 means that the starting end portion or the terminal end portion of the first weld bead 4 is at least partially melted by the third weld bead 6. A length N of the elongated portion 6a of the third weld bead 6 is made shorter than the length N_{T} of the long side of the rectangular bottom surface 7a of the retaining member 7. This can keep the shape of the elongated portion accurate.
(e) Next, a welded joint having target shapes of the elongated weld beads is formed by removing the weld metal retaining member 7.

Note that although the welded joint around one bracket is mainly illustrated in Fig. 6, three weld beads are preferably formed around the other bracket (opposite bracket) in a similar manner.

### [Welding Conditions of Gas Shield Arc Welding]

The following describes an example of welding conditions of the gas shield arc welding.
· welding current: 200 A to 400 A, welding voltage: 20 V to 50 V, welding speed: 20 cm/min to 40 cm/min
· shield gas: a gas containing 100 vol% CO₂ gas or a mixture gas of CO₂ gas and Ar gas (a mixture ratio of the mixture gas is, for example, a mixture gas of 20 vol% CO₂ gas + 80 vol% Ar gas)
· welding wire diameter: 1.2 mm to 2.4 mm

### [Boxing Welded Joint of Steel Plate, Vertical Plate, and Bracket]

Next, a welded joint obtained by the boxing welding method according to the present invention is described. Fig. 1 illustrates an external perspective view of an example of the welded joint. The welded joint according to the present invention includes at least the main plate 1, the vertical plate 2, and the bracket 3, and includes weld beads at joint portions between these members. This boxing welded joint has a structure in which the vertical plate 2 having a rectangular parallelepiped shape is placed on the main plate 1 and the vertical plate 2 is sandwiched by the two brackets 3 from both sides. Fillet welding is mainly performed on the joint portions between these members by gas shield arc welding, and thus weld beads including the first to third weld beads 4 to 6 are formed.

The main plate 1 is preferably a steel plate whose thickness (i.e., plate thickness) is 25 mm to 40 mm. Other specifications of the shape are not limited in particular. Examples of the material of the main plate 1 include YP460 steel and YP355 steel.

The vertical plate 2 has a rectangular parallelepiped shape. Other specifications of the shape are not limited in particular. The vertical plate 2 has, for example, a shape such that a long side of a bottom surface (i.e., a plate width) is 100 mm to 200 mm, a short side of the bottom surface (i.e., a plate thickness) is 50 mm to 60 mm, and a height (i.e., a plate length) is 250 mm to 400 mm. Examples of the material of the vertical plate 2 include similar materials to those exemplified for the main plate 1.

The bracket 3 is a triangular prism whose bottom surface is a right triangle, and two side surfaces that form the right angle of the triangular prism are in contact with the main plate 1 and the vertical plate 2. Fig. 2 is a cross-sectional view schematically illustrating a shape of one side of the welded joint, and illustrates the rectangular contact surface 3a of the bracket 3 that is in contact with the main plate 1 and the rectangular bottom surface 7a of the weld metal retaining member 7 placed on the main plate 1. As for an example of the shape of the bracket 3 in the welded joint, a length of the long side of the rectangular contact surface 3a is 200 mm to 400 mm, and a length (Q that will be described later) of the short side of the rectangular contact surface 3a is 10 mm to 30 mm. A material of the bracket 3 is preferably a material similar to that of the main plate 1 and that of the vertical plate 2. Note that specifications of a shape of an actual steel structure (actual structure) are selected as appropriate.

### [Weld Beads]

The weld beads mainly formed by fillet welding include the first weld bead 4, the second weld bead 5, and the third weld bead 6 in an order of formation according to the procedure of the welding method in addition to a weld bead between the vertical plate 2 and the main plate 1. Figs. 1 and 2 illustrate an outline of this shape. Fig. 2 is a cross-sectional view on a surface of the main plate 1 on one side in appearance of the joint portion of Fig. 1, and the bracket 3 is illustrated as the rectangular contact surface 3a that is in contact with the main plate 1, and the weld metal retaining member 7 is illustrated as the rectangular bottom surface 7a. As for the shape of the weld beads in fillet welding of such a T-joint, a leg length (i.e., a width of a weld) is in a range of 7 mm to 18 mm.

### [First Weld Bead 4]

The first weld bead 4 is a weld bead formed along one short side (specifically, a short side that is not in contact with the vertical plate 2) of the rectangular contact surface 3a.

A weld toe portion of the first weld bead 4 formed along the short side is a portion where a fatigue crack is most likely to occur due to local stress concentration. Furthermore, in a case of a floating offshore wind power generation facility to which the welding method according to the present invention is applicable, a fatigue crack is more likely to occur due to structural stress concentration of the wind power generation facility in addition to the local stress concentration, as described later.

To suppress occurrence of such a fatigue crack, it is important to elongate the second weld bead 5 and the third weld bead 6 described below on the main plate 1.

### [Second Weld Bead 5 and Third Weld Bead 6]

The second weld bead 5 is a weld bead formed along one long side of the rectangular contact surface 3a of the bracket 3 so as to cover a part of the starting end portion or the terminal end portion of the first weld bead 4 and be further elongated on the main plate 1. The third weld bead 6 is a weld bead formed along the other long side of the rectangular contact surface 3a so as to cover a part of the terminal end portion or the starting end portion of the first weld bead 4 and be further elongated on the main plate 1.

In Fig. 2, the second weld bead 5 and the third weld bead 6 formed along the long sides are vertically symmetrical, and although the second weld bead 5 is located on an upper side with respect to the rectangular contact surface 3a and the third weld bead 6 is located on a lower side with respect to the rectangular contact surface 3a in Fig. 2, the positions of the second weld bead 5 and the third weld bead 6 may be reversed.

In order to improve fatigue strength of the welded joint, it is important to adjust the spacing M between the elongated portion 5a of the second weld bead 5 and the elongated portion 6a of the third weld bead 6 and the spacing N between the short side of the rectangular contact surface 3a and a tip of the second weld bead 5 or the third weld bead 6, which are shapes of the elongated portions, as described above.

### [Shapes of Elongated Portions]

The following description is given with reference to Figs. 1 and 2.

As preferable shapes of the elongated portions for improving fatigue strength of the welded joint, the spacing N between the tip of the second weld bead 5 or the tip of the third weld bead 6 and the short side of the rectangular contact surface 3a of the bracket 3 is preferably 5.0 mm to 60.0 mm. Here, the spacing N is a shorter one of the spacing between the short side of the rectangular contact surface 3a and the tip of the second weld bead 5 and the spacing between the short side of the rectangular contact surface 3a and the tip of the third weld bead 6. The "spacing between the short side of the rectangular contact surface 3a and the tip of the second weld bead 5 (or the third weld bead 6)" refers to a spacing (i.e., a length) from an end portion of the rectangular contact surface 3a to the tip of the second weld bead 5 (or the third weld bead 6).

In a case where the spacing N is less than 5.0 mm, the length of the elongated portion 5a of the second weld bead 5 or the elongated portion 6a of the third weld bead 6 is too short, and therefore a fatigue crack easily propagates, which is not preferable. In a case where the spacing N is greater than 60.0 mm, it takes a long time to perform welding work, which is not preferable. More preferably, the spacing N is 5.0 mm to 30.0 mm. Still more preferably, the spacing N is equal to or greater than 10.0 mm and equal to or less than 20.0 mm.

Next, it is preferable that the spacing M between the elongated portion 5a of the second weld bead 5 and the elongated portion 6a of the third weld bead 6 satisfy M ≤ 10.0 mm and M ≤ Q, where Q is the length of the short side of the bracket rectangular contact surface 3a. When M > 10.0 mm, the effect of reducing stress concentration starts to decrease. This is not preferable since the effect of improving fatigue strength is small. When M ≤ Q, stress concentration at the weld bead toe portions can be reduced. Note that the spacing M is an internal distance as illustrated in Fig. 2. Note that the boxing welding according to the present application includes a case where the second and third beads are linear.

Furthermore, the elevation angle (i.e., rising angle) θ from the main plate 1 is equal to or less than 60° in a shape of a region where the second weld bead 5 and/or the third weld bead 6 elongated on the main plate 1 are in contact with the main plate 1 in the cross section orthogonal to the longitudinal direction of the second weld bead 5 and/or the third weld bead 6 elongated on the main plate 1. This is because in a case where the second weld bead and/or the third weld bead are formed by using the retaining member 7 according to the present invention, the shapes of the cross sections of the weld beads are formed along the curves whose elevation angle θ from the rectangular bottom surface 7a of the retaining member 7 is equal to or less than 60°, as illustrated in Fig. 5 described above. This makes the elevation angle θ of the weld toe portions of the elongated portions from the main plate 1 equal to or less than 60°, thereby making it possible to reduce or avoid stress concentration at the elongated portions. The elevation angle θ is preferably equal to or less than 50°. From the perspective of welding work, the elevation angle θ is preferably equal to or greater than 5°, more preferably equal to or greater than 10°, still more preferably equal to or greater than 15°.

### [Welded Joint in Floating Offshore Wind Power Generation Facility]

The boxing welding method according to the present invention is also applicable to a welded joint in a floating offshore wind power generation facility.

An outline of the floating offshore wind power generation facility is described below.

Wind power generation is a form of renewable energy, and offshore wind power generation facilities installed at sea are classified into bottom-fixed types and floating types, and a floating offshore wind power generation facility is used in a sea area having a depth of 50 m or more. The floating offshore wind power generation facility has a structure such that a structure on which a windmill is placed is kept afloat on the sea by being moored with chains or the like. The structure includes a tower portion for supporting and holding a windmill (wind power generator) and a floating portion on which the tower portion is placed and that floats on the sea. The tower portion and the floating portion serving as a base are joined by welding, and improvement of a fatigue life in a welded joint portion is an important issue.

In view of this, in a case where the present invention is applied to such a floating offshore wind power generation facility, the present invention is carried out assuming that the main plate is a floating member of the floating offshore wind power generation facility and the vertical plate is a tower member of the floating offshore wind power generation facility. That is, a welded joint having improved fatigue strength is obtained by elongating weld beads on the floating member by using a weld metal retaining member.

### EXAMPLES

The present invention is further described on the basis of Examples. Note, however, that Examples below are merely illustrative examples for describing the present invention in more detail and do not limit the scope of the present invention.

First, YP460 steel having a plate width of 100 mm was used as a test material. Welded joints were produced by fillet welding the test material under conditions of a welding current 230 A, a welding voltage 30 V, and a welding speed 34 cm/min by gas shield arc welding using a shield gas containing 100 vol% CO₂ gas. The produced welded joints include welded joints obtained by performing fillet welding as in the conventional arts and welded joints in which weld beads were elongated by using a weld metal retaining member. Note that the welded joints obtained by performing fillet welding as in the conventional arts are welded joints in which no elongated portion is formed.

A fatigue test was conducted on the welded joints by fixing the welded joints with a chuck, which is a gripping fixture of a fatigue testing machine, and applying a fatigue load (specifically, tension and compression) onto joints thereof. An applied stress range was set to 150 MPa in each case. The number of cycles to fracture was counted as a fatigue life. Table 1 shows results of the fatigue test of the welded joints.

**[Table 1]**

| Joint No. | Shape of retaining member | | | | Shape concerning elongated weld beads (measured values) | | Shape of bracket | Error between shape of retaining member and measured shape of elongated weld beads | | Welded joint | Fatigue test | | Remarks |
|---|---|---|---|---|---|---|---|---|---|---|---|---|---|
| | Elevation angle θ from rectangular bottom surface [°] | Length N_{T} of long side of rectangular bottom surface [mm] | Length M_{T} of short side of rectangular bottom surface [mm] | Cross-sectional shape | Length N of elongated weld beads [mm] | Spacing M between elongated weld beads [mm] | Short side Q of rectangular contact surface [mm] | Error between length N_{T} of long side of retaining member and length N of elongated weld beads [%] | Error between length M_{T} of short side of retaining member and spacing M between elongated weld beads [%] | Elevation angle θ (measured value) | Applied stress range [MPa] | Number of cycles to fracture [cycles] | |
| 1 | - | - | - | - | (No elongated portion) | (No elongated portion) | 10.0 | - | - | - | 150 | 2.7×10⁵ | Comparative example |
| 2 | - | - | - | - | (No elongated portion) | (No elongated portion) | 25.0 | - | - | - | 150 | 2.6×10⁵ | Comparative example |
| 3 | - | - | - | - | 4.2 | 9.8 | 10.0 | - | - | - | 150 | 2.9×10⁵ | Comparative example |
| 4 | - | - | - | - | 5.4 | 10.5 | 25.0 | - | - | - | 150 | 2.8×10⁵ | Comparative example |
| 5 | 60 | 3.1 | 8.3 | Fig. 4(a) | 3.2 | 8.5 | 10.0 | 3.2 | 2.4 | 59 | 150 | 3.1×10⁵ | Example according to present invention |
| 6 | 60 | 4.1 | 9.7 | Fig. 4(c) | 4.2 | 9.8 | 25.0 | 2.4 | 1.0 | 58 | 150 | 3.0×10⁵ | Example according to present invention |
| 7 | 60 | 5.1 | 10.6 | Fig. 4(c) | 5.4 | 10.5 | 25.0 | 5.9 | 0.9 | 59 | 150 | 3.0×10⁵ | Example according to present invention |
| 8 | 60 | 6.5 | 9.5 | Fig. 4(a) | 6.7 | 9.4 | 10.0 | 3.1 | 1.1 | 59 | 150 | 3.9×10⁵ | Example according to present invention |
| 9 | 60 | 20.4 | 5.4 | Fig. 4(a) | 20.5 | 5.5 | 10.0 | 0.5 | 1.9 | 58 | 150 | 3.7×10⁵ | Example according to present invention |
| 10 | 60 | 40.3 | 3.5 | Fig. 4(a) | 40.2 | 3.3 | 10.0 | 0.2 | 5.7 | 58 | 150 | 3.8×10⁵ | Example according to present invention |
| 11 | 60 | 60.0 | 1.5 | Fig. 4(b) | 59.8 | 1.4 | 10.0 | 0.3 | 6.7 | 59 | 150 | 3.7×10⁵ | Example according to present invention |
| 12 | 60 | 5.5 | 5.2 | Fig. 4(b) | 5.6 | 5.0 | 25.0 | 1.8 | 3.8 | 59 | 150 | 3.9×10⁵ | Example according to present invention |
| 13 | 60 | 59.8 | 1.1 | Fig. 4(b) | 60.0 | 1.0 | 25.0 | 0.3 | 4.8 | 58 | 150 | 3.8×10⁵ | Example according to present invention |
| 14 | 60 | 10.2 | 8.2 | Fig. 4(b) | 10.5 | 8.4 | 25.0 | 2.9 | 2.4 | 58 | 150 | 3.7×10⁵ | Example according to present invention |
| 15 | 60 | 10.3 | 4.2 | Fig. 4(b) | 10.4 | 4.4 | 25.0 | 1.0 | 4.8 | 59 | 150 | 3.8×10⁵ | Example according to present invention |
| 18 | 5 | 4.0 | 9.0 | Fig. 4(a) | 4.1 | 9.1 | 25.0 | 2.5 | 1.1 | 5 | 150 | 3.4×10⁵ | Example according to present invention |
| 19 | 20 | 10.0 | 1.5 | Fig. 4(a) | 10.1 | 1.6 | 25.0 | 1.0 | 6.7 | 19 | 150 | 3.1×10⁵ | Example according to present invention |
| 20 | 40 | 20.0 | 7.0 | Fig. 4(a) | 20.1 | 7.1 | 25.0 | 0.5 | 1.4 | 39 | 150 | 3.2×10⁷ | Example according to present invention |

Joints No. 1 and No. 2 are comparative examples and are test results obtained in a case where fillet welding was performed as in the conventional arts.

Since the weld beads are not elongated, stress concentration occurred at a weld toe portion of a short side of a gusset, and the number of cycles to fracture was as shown in Table 1.

Joints No. 3 and No. 4 are comparative examples and are test results obtained in a case where elongated weld beads were formed without using a weld metal retaining member. Since a weld metal retaining member was not used, predetermined elongated weld bead length and spacing could not be obtained, and the number of cycles to fracture was as shown in Table 1.

A joint No. 5 is an example according to the present invention and is a test result obtained in a case where the weld beads were elongated by using a weld metal retaining member in which the length N_{T} of the rectangular bottom surface in the longitudinal direction is 3.1 mm and the length M_{T} of the short side of the rectangular bottom surface is 8.3 mm. The number of cycles to fracture was improved as compared with the comparative examples. Note that since the length N_{T} of the rectangular bottom surface in the longitudinal direction is deviated from a lower limit value (5.0 mm) of the preferable range, a degree of improvement of the number of cycles to fracture was small.

A joint No. 6 is also an example according to the present invention and is a test result obtained in a case where the weld beads were elongated by using a weld metal retaining member in which the length N_{T} is 4.1 mm and the length M_{T} is 9.7 mm. The number of cycles to fracture was improved as compared with the comparative examples. Note that since the length N_{T} is deviated from the lower limit value (5.0 mm) of the preferable range, a degree of improvement of the number of cycles to fracture was small.

Note that a joint No. 18 also exhibited a similar test result.

A joint No. 7 is an example according to the present invention and is a test result obtained in a case where the weld beads were elongated by using a weld metal retaining member in which the length N_{T} is 5.1 mm and the length M_{T} is 10.6 mm. The number of cycles to fracture was improved as compared with the comparative examples. Note that since the length M_{T} is deviated from an upper limit value (10.0 mm) of the preferable range, a degree of improvement of the number of cycles to fracture was small.

Joints No. 8 to No. 15 are examples according to the present invention and are test results obtained in a case where the weld beads were elongated by using a weld metal retaining member in which the length N_{T} is 5.0 mm to 60.0 mm and the length M_{T} is greater than 0.0 mm and equal to or less than 10.0 mm. As a result of measurement performed after formation of the elongated weld beads, both an error between the length N_{T} and the length N of the elongated weld beads measured after formation of the elongated weld beads and an error between the length M_{T} and the spacing M between the elongated weld beads measured after formation of the elongated weld beads were within 7.0%. The number of cycles to fracture was larger than that in a case where the conventional fillet welding was performed.

Joints No. 19 and No. 20 also exhibited a similar test result.

Note that the welded joints of the examples according to the present invention were welded while using the lengths (M_{T} and N_{T}) of the shape of the retaining member as a guide. The shape illustrated in any of Figs. 4(a) to 4(c) was used as the shape of the cross sections of the front side surface and the rear side surface of the used retaining member. A ceramic material was used as a material of the retaining member.

The above results show that when the length N of the elongated weld beads is smaller than 5.0 mm, the number of cycles to fracture is slightly improved as compared with a case where the conventional fillet welding was performed. When the spacing M between the elongated weld beads is larger than 10.0 mm, the number of cycles to fracture is slightly improved as compared with a case where the conventional fillet welding was performed. On the other hand, when the length N of the elongated weld bead is equal to or greater than 5.0 mm and the spacing M between the elongated weld beads is equal to or less than 10.0 mm and is equal to or less than the length Q of the short side of the rectangular contact surface of the bracket, the number of cycles to fracture was larger than that in a case where the conventional fillet welding was performed.

From the above, an effect of further improving fatigue strength of a welded joint was achieved by controlling a spacing between elongated weld beads and a length of the elongated weld beads by using the weld metal retaining member according to the present invention.

### Reference Signs List

1 main plate
2 vertical plate
3 bracket
3a rectangular contact surface of bracket that makes contact with steel plate (i.e., bracket rectangular contact surface)
4 first weld bead
5 second weld bead
5a elongated portion of second weld bead (i.e., second elongated weld bead)
6 third weld bead
6a elongated portion of third weld bead (i.e., third elongated weld bead)
7 weld metal retaining member
7a rectangular bottom surface of weld metal retaining member
7b rectangular upper surface of weld metal retaining member
7c front side surface of weld metal retaining member
7d rear side surface of weld metal retaining member
7e lateral side surfaces of weld metal retaining member
M spacing between elongated portion of second weld bead and elongated portion of third weld bead (unit: mm)
N shorter one of spacing between short side of bracket rectangular contact surface and tip of second weld bead and spacing between short side of bracket rectangular contact surface and tip of third weld bead (unit: mm)
Q length of short side of bracket rectangular contact surface (unit: mm)
M_{T} length of short side of rectangular bottom surface of weld metal retaining member (i.e., bottom surface width) (unit: mm)
N_{T} length of rectangular bottom surface of weld metal retaining member in longitudinal direction (unit: mm)
H_{T} length between rectangular upper surface and rectangular bottom surface of weld metal retaining member (i.e., height) (unit: mm)
X center line of rectangular bottom surface of weld metal retaining member (in longitudinal direction)
Y plate thickness center line of bracket
θ elevation angle (i.e., rising angle) from rectangular bottom surface of weld metal retaining member (unit: °)

## Claims

1. A boxing welding method for welding a main plate, a vertical plate, and a bracket by using a weld metal retaining member, the weld metal retaining member having a rectangular bottom surface that makes contact with the main plate, the boxing welding method comprising:
forming a first weld bead along a short side of a rectangular contact surface where the bracket makes contact with the main plate;
placing the weld metal retaining member adjacent to the first weld bead on the main plate; and
sequentially forming a second weld bead and a third weld bead along long sides of the rectangular contact surface so that the second weld bead and the third weld bead cover end portions of the first weld bead and are elongated on the main plate along the weld metal retaining member.

2. The boxing welding method according to claim 1, wherein
a spacing N that is a shorter one of a spacing between the short side of the rectangular contact surface and a tip of the second weld bead and a spacing between the short side of the rectangular contact surface and a tip of the third weld bead is 5.0 mm to 60.0 mm, and
M ≤ 10.0 mm and M ≤ Q, where M is a spacing between an elongated portion of the second weld bead and an elongated portion of the third weld bead and Q is a length of the short side of the rectangular contact surface.

3. The boxing welding method according to claim 1 or 2, wherein
the weld metal retaining member has a shape such that a length N_{T} of the rectangular bottom surface in a longitudinal direction is 5.0 mm to 60.0 mm, and
a front side surface and a rear side surface of the weld metal retaining member that are cross sections orthogonal to the longitudinal direction have an inverted trapezoid shape, and a bottom surface width M_{T} that is a length of the short side of the rectangular bottom surface is greater than 0.0 mm and equal to or less than 10.0 mm.

4. The boxing welding method according to any one of claims 1 to 3, wherein
a shape of a region in which lateral side surfaces of the weld metal retaining member make contact with the weld beads on a cross section orthogonal to a longitudinal direction of the weld metal retaining member is a curved line or a straight line whose elevation angle θ from the rectangular bottom surface is equal to or less than 60°.

5. The boxing welding method according to any one of claims 1 to 4, wherein
the weld metal retaining member is made of copper or is made of a ceramic material.

6. The boxing welding method according to any one of claims 1 to 5, wherein
the main plate is a floating member of a floating offshore wind power generation facility, and the vertical plate is a tower member of the floating offshore wind power generation facility.

7. A boxing welded joint including a main plate, a vertical plate, and a bracket, the boxing welded joint comprising:
a first weld bead;
a second weld bead; and
a third weld bead, wherein
the first weld bead is formed along one short side of a rectangular contact surface where the bracket makes contact with the main plate,
the second weld bead and the third weld bead are formed along respective long sides of the rectangular contact surface so as to cover a part of a starting end portion or a part of a terminal end portion of the first weld bead and be elongated on the main plate, and
a region in which the second weld bead and/or the third weld bead elongated on the main plate make contact with the main plate on a cross section orthogonal to a longitudinal direction of the second weld bead and/or the third weld bead elongated on the main plate has a shape whose elevation angle θ from the main plate is equal to or less than 60°.

8. The boxing welded joint according to claim 7, wherein
a spacing N that is a shorter one of a spacing between the short side of the rectangular contact surface and a tip of the second weld bead and a spacing between the short side of the rectangular contact surface and a tip of the third weld bead is 5.0 mm to 60.0 mm, and
M ≤ 10.0 mm and M ≤ Q, where M is a spacing between an elongated portion of the second weld bead and an elongated portion of the third weld bead and Q is a length of the short side of the rectangular contact surface.

9. The boxing welded joint according to claim 7 or 8,
wherein
the main plate is a floating member of a floating offshore wind power generation facility, and the vertical plate is a tower member of the floating offshore wind power generation facility.
